# EUROPEAN PATENT APPLICATION

(11) **EP 4 535 037 A1**
(43) Date of publication of application: **09.04.2025**
(21) Application number: 24204032.7
(22) Date of filing: 01.10.2024
(51) Int. Cl.: G01S 13/88, F16P 3/14, G01S 7/41, G01S 13/56, G01S 13/42, G01S 13/86

(54) **SYSTEM AND METHOD FOR DETECTION OF ANOMALOUS OBJECTS IN AREA OF INTEREST**

(30) Priority: 02.10.2023 US 202363587205 P
(71) Applicant: Carrier Corporation, Palm Beach Gardens, FL 33418 (US)
(72) Inventor: MAZUR, Mateusz, Gdansk 80-890, (PL); WOLSKI, Leszek, Gdansk 80-890, (PL); CEGIELSKI, Tomasz, Gdansk 80-890, (PL)
(74) Representative: Dehns

(57) **Abstract**

A system (100) and method (400) for a detection of anomalous objects (194-1... 194-N) in an area of interest, AOI, (150) is disclosed. The method (400) includes receiving (402), by a computing device (200), from a control unit (182) associated with one or more objects (192-1... 192-N), a first set of movement parameters associated with movement of the one or more objects (192-1... 192-N) in the AOI (150). The method (400) further includes extracting (404), by the computing device (200), from output signals generated by the one or more sensors (102, 104), a second set of movement parameters associated with movements in the AOI (150). The method (400) further includes comparing (406), by the computing device (200), the first and second sets of movement parameters and determining (408), by the computing device (200), presence of one or more anomalous objects (194-1... 194-N) in the AOI (150) based on the comparison of the first and second movement parameters.

## Description

This invention relates to detection of anomalous objects, such as intruders, in a area of interest, and more particularly, to detection of anomalous objects using radar-based sensors in the area of interest.

In radar systems, such as Doppler radar systems, an emitted set of electromagnetic (EM) pulses may strike an object in a field of view (FOV) of the radar system, and be reflected. A receiver of the radar system may receive a set of reflected EM pulses. If the object has a velocity relative to the radar unit, the frequency spectrum of reflected EM pulses may be shifted by the Doppler effect, relative the set of emitted EM pulses. The Doppler effect may be used to determine the relative velocity of the object.

Generally, when anomalous objects are detected in an area of interest (AOI), an alarm may be generated to warn users or other authorized entities of the AOI, of the presence of the anomalous objects. However, in some cases, the signals from the sensors configured to detect presence of anomalous objects may only be indicative of a presence of a potential anomalous object. In other words, a probability of positive presence of the anomalous object may not be high enough to confirm positive presence of the anomalous objects, nor may the probability be low enough to ignore the signals.

According to a first aspect of the invention there is provided a system for detection of one or more anomalous objects in an area of interest (AOI). The system includes one or more sensors configured to detect movement in the AOI. The system further includes a computing device communicably coupled to the one or more sensors. The computing device is configured to receive, from a control unit associated with one or more objects, a first set of movement parameters associated with movement of the one or more objects in the AOI. The computing device is further configured to extract, from output signals generated by the one or more sensors, a second set of movement parameters associated with movements in the AOI. The computing device is further configured to compare the first and second sets of movement parameters. The computing device is further configured to determine presence of one or more anomalous objects in the AOI based on the comparison of the first and second movement parameters.

Optionally, any one or both of the first and second sets of movement parameters includes one or more of velocity, coordinates in time, and no movement.

Optionally, responsive to detecting movement by the one or more sensors, the computing device is further configured to operate, through the control unit, the one or more first objects to change one or more of the first set of movement parameters. Responsive to detecting movement by the one or more sensors, the computing device is further configured to identify the one or more anomalous objects based on the comparison of the changed one or more of the first sets of movements parameters and the second sets of movement parameters.

Optionally, changing one or more of the first set of movement parameters includes changing velocity of the one or more objects.

Optionally, changing one or more of the first set of movement parameters includes changing velocity of the one or more objects at regular intervals to predefined values.

Optionally, changing one or more of the first set of movement parameters includes changing velocity of the one or more objects to zero velocity for a predefined duration of time.

Optionally, any one or both of the first and second sets of movement parameters further include respective real-time positions of the one or more first objects in the area of interest.

Optionally, the respective real-time positions of the one or more first objects include any one of 2-Dimensional and 3-Dimensional positions of the one or more first objects in the AOI.

Optionally, the one or more sensors include radar units.

Optionally, the radar units include any one or a combination of Doppler, frequency modulated continuous wave (FMCW), ultra-wide band (UWB) and pulse radar units.

Optionally, the the one or more sensors include any one or a combination of Time of Flight (ToF), Lidar and passive infrared (PIR) units.

According to a second aspect of the invention there is provided a method for detection of one or more anomalous objects in an area of interest (AOI). The method includes receiving, by a computing device, from a control unit associated with one or more objects, a first set of movement parameters associated with movement of the one or more objects in the AOI. The method further includes extracting, by the computing device, from output signals generated by one or more sensors, a second set of movement parameters associated with movements in the AOI. The method further includes comparing, by the computing device, the first and second sets of movement parameters determining, by the computing device, presence of one or more anomalous objects in the AOI based on the comparison of the first and second movement parameters.

Optionally, any one or both of the first and second sets of movement parameters include one or more of velocity, coordinates in time, and no movement.

Optionally, responsive to detecting movement by the one or more sensors, the method further includes operating, by the computing device, through the control unit, the one or more first objects to change one or more of the first set of movement parameters. Responsive to detecting movement by the one or more sensors, the method further includes identifying, by the computing device, the one or more anomalous objects based on the comparison of the changed one or more of the first sets of movements parameters and the second sets of movement parameters.

Optionally, changing one or more of the first set of movement parameters includes changing velocity of the one or more objects.

Optionally, changing one or more of the first set of movement parameters includes changing velocity of the one or more objects at regular intervals to predefined values.

Optionally, changing one or more of the first set of movement parameters includes changing velocity of the one or more objects to zero velocity for a predefined duration of time.

Optionally, any one or both of the first and second sets of movement parameters further include respective real-time positions of the one or more first objects in the area of interest.

Optionally, the respective real-time positions of the one or more first objects include any one of 2-Dimensional and 3-Dimensional positions of the one or more first objects in the AOI.

Optionally, the one or more sensors include radar units.

Optionally, the radar units include any one or a combination of Doppler, frequency modulated continuous wave (FMCW), ultra-wide band (UWB) and pulse radar units.

Optionally, the the one or more sensors include any one or a combination of Time of Flight (ToF), Lidar and passive infrared (PIR) units.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

The accompanying drawings are included to provide a further understanding of the subject disclosure of this invention and are incorporated in and constitute a part of this specification. The drawings illustrate exemplary embodiments of the invention and, together with the description, serve to explain the principles of the invention.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label. Certain exemplary embodiments will now be described in greater detail by way of example only and with reference to the accompanying drawings in which:
FIG. 1 is a schematic representation of a system for detection of anomalous objects in an area of interest;
FIG. 2 is a detailed schematic block diagram of a computing device of the system of FIG. 1;
FIG. 3 is detailed schematic block diagram of another computing device of the system of FIG. 1;
FIG. 4 is a schematic flow diagram for a method for for detection of anomalous objects in an area of interest; and
FIG. 5 is an exemplary schematic block diagram of a hardware system used for implementing the computing device of FIG. 2 and/or FIG.3.

The following is a detailed description of embodiments of the invention depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this invention. described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components.

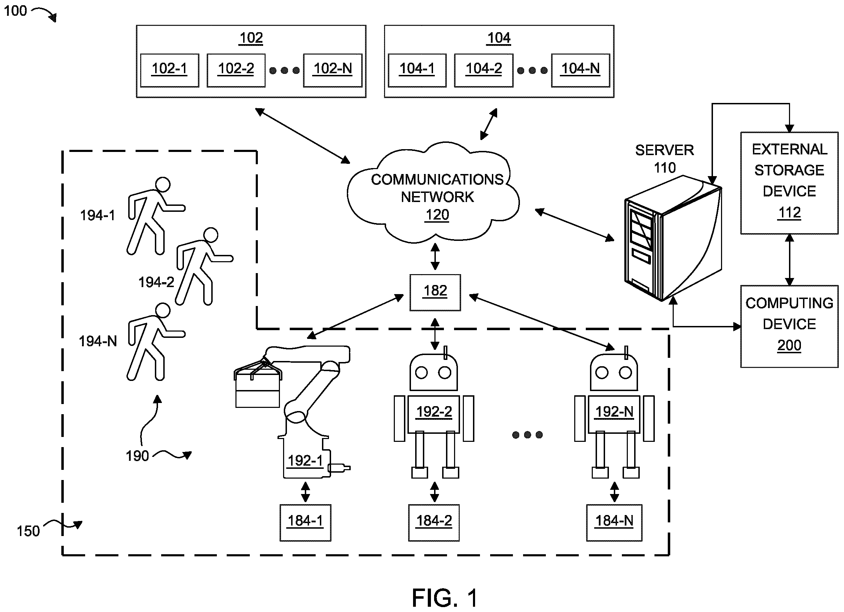

Referring to FIG. 1, a schematic representation of a system 100 for detection of anomalous objects 194 in an area of interest (AOI) 150 is shown. In some embodiments, the AOI 150 may refer to any area, indoor, or outdoor, wherein objects 190 are adapted to move. In some examples, the AOI 150 may be a warehouse, or a storage area where objects 190 are adapted to move. In some embodiments, the objects 190 may include first objects 192 and anomalous objects 194.

In some embodiments, the objects 190 may include robots. Specifically, the first objects 192 may include robots. The illustrated embodiment of FIG. 1 shows first objects 192-1, 192-2... 192-N. The first objects 192-1, 192-2... 192-N may be collectively interchangeably referred to as "the first objects 192". The robots may be adapted to have constrained motion, such as robotic arms that are adapted to move in predefined ways. The robots may also have more freedom to move, such as autonomous mobile robots that are adapted to move with predefined velocities, along predefined paths. In one or more embodiments, the robots may be configured with predefined goals and/or motion targets, and the robots may be configured to determine a path and velocity of their motion based on the predefined goals and/or motion targets. In some embodiments, the first objects 192 may include both kinds of robots mentioned previously. In some embodiments, the first objects 192 may be communicably coupled to control units 182 configured to operate the first objects 192. In the illustrated embodiment of FIG. 1, the system 100 includes a single control unit 182 configured to operate all the first objects 192. However, in some embodiments, each first object 192 may include a separate associated control unit. Further, the first objects 192 may be communicably coupled to first location units 184 configured to generate signals indicative of a real-time location of the first objects 192. In the illustrated embodiment of FIG. 1, each first object 192-1, 192-2... 192-N may include a respective associated first location units 184-1, 184-2... 184-N. However, in some embodiments, the system 100 includes a single first location unit 184 communicably coupled to all the first objects 192.

In some embodiments, the objects 190 may include human beings. Specifically, the anomalous objects 194 may include human beings. Anomalous objects may be any that are not allowed to be present within the AOI 150. In some examples, human beings, or other living creatures may not be allowed to be present in the AOI 150 during certain periods or durations of time. Any human being, or other living creatures present during such periods may be deemed to be anomalous objects 194. The illustrated embodiment of FIG. 1 shows anomalous objects 194-1, 194-2... 194-N. The anomalous objects 194-1, 194-2... 194-N may be collectively interchangeably referred to as "the anomalous objects 194".

The objects 190 (including the first objects 192, and the anomalous objects 194) may move with movement attributes. In some embodiments, the movement attributes may include velocities of movement of the objects 190. In some embodiments, the movement attributes may include any one or a combination of velocities of movement and real-time locations of the objects 190.

The system 100 may further include one or more sensors 102 disposed at various locations in the AOI 150. The illustrated embodiment of FIG. 1 shows sensors 102-1, 102-2...102-N. The one or more sensors 102-1, 102-2...102-N may be collectively interchangeably referred to as "the sensors 102". The sensors 102 may be configured to detect movement of objects 190 in the AOI 150. Responsive to detecting movement of the objects 190, the sensors 102 may be further configured to generate signals. In some embodiments, each of the sensors 102 may be communicably coupled to each other through a communications network 120.

In some embodiments, the communication network 120 may be a hardwired communication network. The hardwired communication network may be an optic cable, or a metallic cable provided in the structure of the premises 150 in which the sensors 102 are disposed. The hardwired communication network may be configured to transmit low amounts of data. Specifically, the hardwired communication network may be configured to transmit the signal generated by the sensors 102 responsive to detection of the emergency event. When any one of the sensors 102 detects the emergency event, and generates the signal, the signal may be received by, and transmitted through the hardwired communication network to the other sensors 102.

In some embodiments, the communication network 120 may be a wireless communication network. The wireless communication network may be any wireless communication network capable of transferring data between entities of that network such as, without limitations, a carrier network including circuit switched network, a public switched network, a Content Delivery Network (CDN) network, a Long-Term Evolution (LTE) network, a Global System for Mobile Communications (GSM) network and a Universal Mobile Telecommunications System (UMTS) network, an Internet, intranets, local area networks, wide area networks, mobile communication networks, Bluetooth low energy (BLE) networks, and combinations thereof. Through the communication network 120, the sensors 102 may be configured to transmit signals to each other or to an external device.

In some embodiments, the sensors 102 may include radar units. Each radar unit may include a transmitter and a receiver. The transmitter may be configured to emit an electromagnetic (EM) wave through a field of view (FOV) of the radar unit. The FOV may include the AOI 150. When the EM wave is incident upon any object in the AOI 150, it is reflected, and the reflected EM wave is received by the receiver. In some embodiments, the radar units may include any one or a combination of Doppler, frequency modulated continuous wave (FMCW), ultra-wide band (UWB) and pulse radar units. The Doppler (or FMCW, or UWB, or pulse) radar units may utilize the Doppler effect to determine a relative movement of the objects relative to the receiver of the radar unit. The FMCW radar units may determine relative movement and relative position of the objects relative to the position of the radar unit.

The system 100 may further include second sensors 104. The illustrated embodiment of FIG. 1 shows second sensors 104-1, 104-2... 104-N. The second sensors 104-1, 104-2... 104-N may be collectively interchangeably referred to as "the second sensors 104". The second sensors 104 may be configured to detect presence of potential one or more anomalous objects 194 in the AOI 150. Responsive to detecting presence of potential one or more anomalous objects 194 in the AOI 150, the second sensors 104 may be further configured to generate signals. The second sensors 104 may include any one or a combination of vibration sensors, thermal sensors, audio sensors, visual sensors, etc. that may be adapted to detect a presence of the anomalous objects 192, such as human beings, or other living creatures. In some embodiments, each of the second sensors 104 may be communicably coupled to each other through the communications network 120.

Generally, when anomalous objects 194 are detected in the AOI 150, an alarm may be generated to warn users or other authorized entities of the AOI 150, of the presence of the anomalous objects 194. However, in some cases, the signals from the second sensors 104 may only be indicative of a presence of a potential anomalous object 194. In other words, a probability of positive presence of the anomalous object 194 may not be high enough to confirm positive presence of the anomalous objects 194, nor may the probability be low enough to ignore the signals. In such cases, it may be preferable to confirm the positive presence of anomalous objects 194 in the AOI before any countermeasures, such as generation of alarm, may be deployed.

There is, therefore, a requirement for a means to confirm positive presence of anomalous objects in an area of interest. It would be further preferable if the means may be integrated within existing infrastructure of the area of interest without significant addition of material or equipment.

The system 100 may further include a server 110. The sensors 102, the second sensors 104, the control unit 182, and the first location units 184 may be communicably coupled to the server 110 through the communications network 120. In some embodiments, the server 110 may be a remote server. In some embodiments, the server 110 may be a cloud-based server. The server 110 may further be communicably coupled to an external storage device 112 through the communication network 120. The external storage device 112 may be configured within the server 110 or may be a cloud-based storage device.

The server 110 may be configured with a computing device 200. The computing device 200 may be configured for detection of anomalous objects 194 in the AOI 150. The computing device 200 may be implemented by way of a single device or a combination of multiple devices that may be communicably coupled or networked together. The computing device 200 may be implemented in hardware or a suitable combination of hardware and software. The computing device 200 may be a hardware device including a processor executing machine-readable program instructions. The "hardware" may include a combination of discrete components, an integrated circuit, an application-specific integrated circuit, a field programmable gate array, a digital signal processor, or other suitable hardware. The "software" may include one or more objects, agents, threads, lines of code, subroutines, separate software applications, two or more lines of code or other suitable software structures operating in one or more software applications or on one or more processors. The processor may include, for example, without limitations, microprocessors, microcomputers, microcontrollers, digital signal processors, central processing units, state machines, logic circuits, any devices that manipulate data or signals based on operational instructions, and the like. Among other capabilities, the processor may fetch and execute computer-readable instructions in the memory operationally coupled with the computing device 200 for performing tasks such as data processing, input/output processing, feature extraction, and/or any other functions. Any reference to a task in the present disclosure may refer to an operation being or that may be performed on data.

The system 100 may further include units, such as, without limitations, a display unit, an audio unit, a notification unit, an input unit, an output unit, and the like; however, the same are not shown in the FIG. 1, for the purpose of clarity.

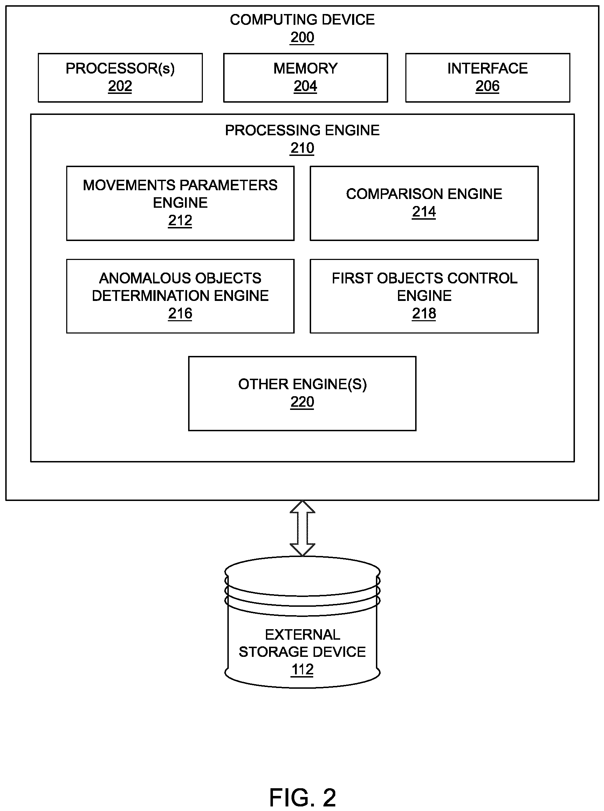

Referring to FIG. 2, a detailed schematic block diagram of the computing device 200 is shown. The computing device 200 includes a processor 202, and a memory 204 communicably coupled to the processor 202. The memory 204 may store instructions executable by the processor 202 to implement the computing device 200. The computing device 200 further includes an interface 206. The interface 206 may include a variety of interfaces, for example, interfaces for data input and output devices, referred to as I/O devices, storage devices, and the like. The interface 206 may also provide a communication pathway for one or more components of the computing device 200. The computing device 200 is communicably coupled to the external storage device 112. The external storage device 112 may be configured to store data generated during execution of instructions by the processor 202 in order to implement the computing device 200. The external storage device 112 may further be configured to store additional data required for implementing the computing device 200.

Referring now to FIGs. 1 and 2, the computing device 200 includes a processing engine 210. The processing engine 210 may be implemented as a combination of hardware and programming (for example, programmable instructions) to implement one or more functionalities of the processing engine 210. In some examples, the processing engine 210 may be implemented by electronic circuitry.

The processing engine 210 may include a movements parameters engine 212, a comparison engine 214, an anomalous object determination engine 216, a first objects control engine 218, and other engine(s) 220. The other engine(s) 220 may include engines configured to perform one or more functions ancillary functions associated with the processing engine 210.

The movements parameters engine 212 may be configured to receive, from the control unit 182 associated with the one or more first objects 192, a first set of movement parameters associated with the movement of the first objects 192 in the AOI 150.

In some embodiments, the movement parameters engine 212 may be configured to operate responsive to receipt of an activation signal. The activation signal may trigger the operations of the processing engine 210 in order to detect the anomalous objects 194 in the AOI 150. The activation signal may include signals received from the second sensors 104 that are indicative of a positive presence of potential one or more anomalous objects 194 in the AOI 150. In some embodiments, the signals may be indicative of a probability of positive presence of potential one or more anomalous objects 194 in the AOI 150. The activation signal may include the signals when the probability is at least equal to or greater than a predefined threshold value.

The movement parameters engine 212 may further be configured to extract, from output signals generated by the sensors 102, a second set of movement parameters associated with movements in the AOI 150. The movements related to the second set of movement parameters may include movement of all objects in the AOI, including the first objects 192 and the anomalous objects 194.

The comparison engine 214 may be configured to compare the first and second sets of movement parameters. In one or more embodiments, any one or both of the first and second sets of movement parameters may include one or more of velocity, coordinates in time, and no movement.

The anomalous objects determination engine 216 may be configured to determine a presence of one or more anomalous objects 194 in the AOI 150 based on the comparison of the first and second sets of movement parameters.

In one or more embodiments, responsive to detecting movement by the sensors 102, the first objects control engine 218 may be operated. The first objects control engine 218 may be configured to operate the one or more first objects 192 to change one or more of the first set of movement parameters.

In one or more embodiments, changing one or more of the first set of movement parameters includes changing velocity of the one or more objects.

In one or more embodiments, changing one or more of the first set of movement parameters includes changing velocity of the one or more objects at regular intervals to predefined values.

In one or more embodiments, changing one or more of the first set of movement parameters includes changing velocity of the one or more objects to zero velocity for a predefined duration of time.

The anomalous objects determination engine 216 may be further configured to determine the presence of one or more anomalous objects 194 in the AOI 150 based on the comparison of the first and second sets of movement parameters, after the first set of movement parameters has been changed.

Specifically, the anomalous objects determination engine 216 is configured to determine, based on comparison of the first and second sets of movement parameters, a difference between the first and second sets of movement parameters. Responsive to the second set of movement parameters different from the first set of movement parameters, the anomalous objects determination engine 216 may be further configured to compare the first set of movement parameters of the one or more first objects 192 with the second set of movement parameters of all the objects 190 in the AOI 150. The anomalous objects determination engine 216 may be further configured to determine one or more objects 190 in the AOI 150 to be the first objects 192 if the second set of movement parameters of the one or more objects 190 in the AOI 150 is substantially equal to the first set of movement parameters.

Once the anomalous objects determination engine 216 determines the presence of the anomalous objects 194 in the AOI, countermeasures, such as raising an alarm may be deployed.

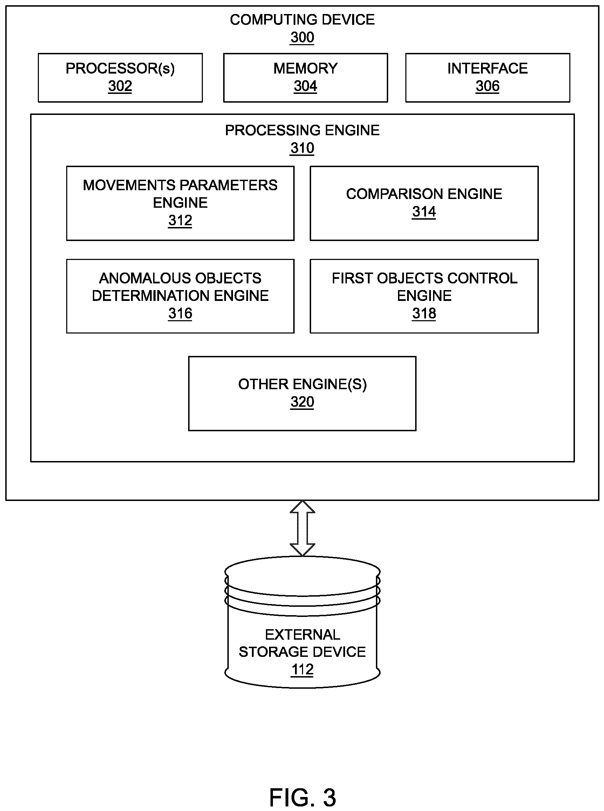

Referring to FIG. 3, a detailed schematic block diagram of another computing device 300 is shown. Referring to FIGs. 1 to 3, the computing device 300 may be included in the system 100. The computing device 300 may operate and function similarly to the computing device 200. The computing device 300 includes a processor 302, and a memory 304 communicably coupled to the processor 302. The computing device 300 further includes an interface 306. The interface 206 may also provide a communication pathway for one or more components of the computing device 200. The computing device 300 is communicably coupled to the external storage device 112. The computing device 300 further includes a processing engine 310. The computing device 300 may be configured to detect the presence of anomalous objects 194 in the AOI 150 by considering movement parameters including the real-time location of the first objects 192 in the AOI 150.

The processing engine 310 may include movements parameters engine 312, a comparison engine 314, an anomalous object determination engine 316, a first objects control engine 318, and other engine(s) 320. The other engine(s) 320 may include engines configured to perform one or more functions ancillary functions associated with the processing engine 310.

The movements parameters engine 312 may be configured to receive, from the control unit 182 associated with the one or more first objects 192, a first set of movement parameters associated with the movement of the first objects 192 in the AOI 150.

In some embodiments, the movement parameters engine 312 may be configured to operate responsive to receipt of an activation signal. The activation signal may trigger the operations of the processing engine 310 in order to detect the anomalous objects 194 in the AOI 150. The activation signal may include signals received from the second sensors 104 that are indicative of a positive presence of potential one or more anomalous objects 194 in the AOI 150. In some embodiments, the signals may be indicative of a probability of positive presence of potential one or more anomalous objects 194 in the AOI 150. The activation signal may include the signals when the probability is at least equal to or greater than a predefined threshold value.

The movement parameters engine 312 may further be configured to extract, from output signals generated by the sensors 102, a second set of movement parameters associated with movements in the AOI 150. The movements related to the second set of movement parameters may include movement of all objects in the AOI, including the first objects 192 and the anomalous objects 194.

The comparison engine 314 may be configured to compare the first and second sets of movement parameters.

The anomalous objects determination engine 316 may be configured to determine a presence of one or more anomalous objects 194 in the AOI 150 based on the comparison of the first and second sets of movement parameters.

In one or more embodiments, responsive to detecting movement by the sensors 102, the first objects control engine 318 may be operated. The first objects control engine 318 may be configured to operate the one or more first objects 192 to change one or more of the first set of movement parameters.

In one or more embodiments, any one or both of the first and second sets of movement parameters further include respective real-time positions of the one or more first objects in the area of interest.

In one or more embodiments, the respective real-time positions of the one or more first objects include any one of 2-Dimensional and 3-Dimensional positions of the one or more first objects in the AOI.

The anomalous objects determination engine 316 may be further configured to determine the presence of one or more anomalous objects 194 in the AOI 150 based on the comparison of the first and second sets of movement parameters, after the first set of movement parameters has been changed.

Specifically, the anomalous objects determination engine 316 is configured to determine, based on comparison of the first and second sets of movement parameters, a difference between the first and second sets of movement parameters. Responsive to the second set of movement parameters different from the first set of movement parameters, the anomalous objects determination engine 316 may be further configured to compare the first set of movement parameters of the one or more first objects 192 with the second set of movement parameters of all the objects 190 in the AOI 150. The anomalous objects determination engine 316 may be further configured to determine one or more objects 190 in the AOI 150 to be the first objects 192 if the second set of movement parameters of the one or more objects 190 in the AOI 150 is substantially equal to the first set of movement parameters.

Once the anomalous objects determination engine 316 determines the presence of the anomalous objects 194 in the AOI, countermeasures, such as raising an alarm may be deployed.

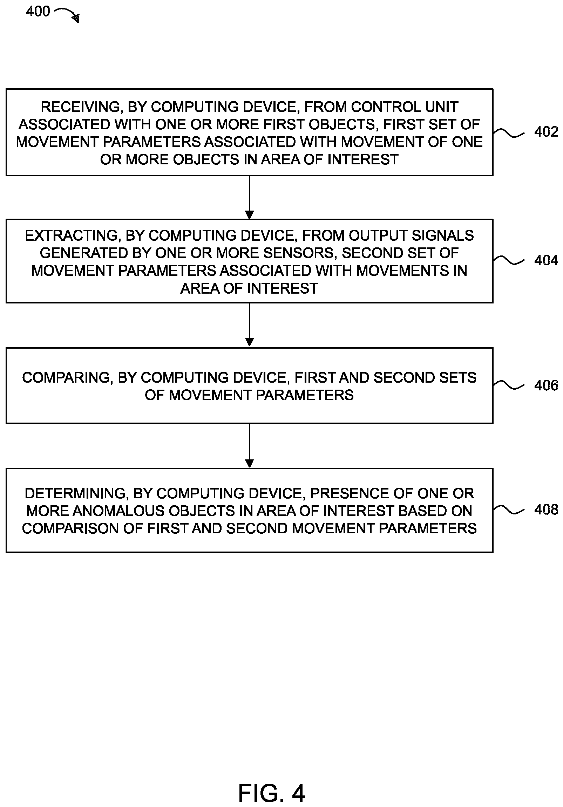

Referring to FIG. 4, a schematic flow diagram for a method 400 for detection of anomalous objects 194 in the AOI 150 is shown. Referring now to FIGs. 1 to 4, at step 402, the method 400 includes receiving, by the computing device 200, 300, from the control unit 182 associated with one or more first objects 192, the first set of movement parameters associated with movement of the one or more first objects 192 in the AOI 150. At step 404, the method 400 further includes extracting, by the computing device 200, 300, from output signals generated by the one or more sensors 102, a second set of movement parameters associated with movements in the AOI 150. At step 406, the method 400 further includes comparing, by the computing device 200, 300, the first and second sets of movement parameters. At step 408, the method 400 further includes determining, by the computing device 200, 300, presence of one or more anomalous objects 194 in the AOI 150 based on the comparison of the first and second movement parameters.

In one or more embodiments, responsive to detecting movement by the one or more sensors 102, the method 400 further includes operating, by the computing device 200, 300, through the control unit 182, the one or more first objects 192 to change one or more of the first set of movement parameters. Responsive to detecting movement by the one or more sensors 102, the method 400 further includes identifying, by the computing device 200, 300, the one or more anomalous objects 194 based on the comparison of the changed one or more of the first sets of movements parameters and the second sets of movement parameters.

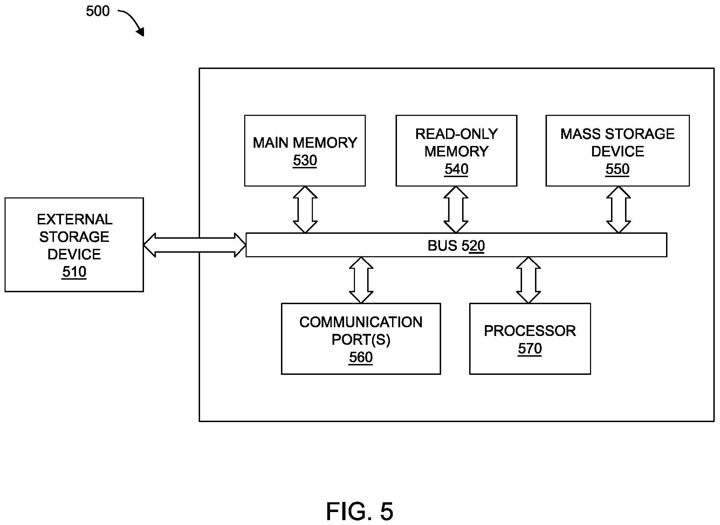

FIG. 5 is an exemplary schematic block diagram of a hardware system used for implementing the computing device 200, 300. As shown in FIG. 5, a computer system 500 can include a database 510, a bus 520, a main memory 530, a read only memory 540, a mass storage device 550, communication port 560, and a processor 570. A person skilled in the art will appreciate that the computer system may include more than one processor and communication ports. Examples of processor 570 include, but are not limited to, an Intel^{®} Itanium^{®} or Itanium 2 processor(s), or AMD^{®} Opteron^{®} or Athlon MP^{®} processor(s), Motorola^{®} lines of processors, FortiSOC^{™} system on chip processors or other future processors. Processor 570 may include various modules. Communication port 560 can be any of an RS-232 port for use with a modem-based dialup connection, a 10/100 Ethernet port, a Gigabit or 10 Gigabit port using copper or fibre, a serial port, a parallel port, or other existing or future ports. Communication port 560 may be chosen depending on a network, such a Local Area Network (LAN), Wide Area Network (WAN), or any network to which computer system connects. Memory 430 can be Random Access Memory (RAM), or any other dynamic storage device commonly known in the art. Read-only memory 540 can be any static storage device(s) e.g., but not limited to, a Programmable Read Only Memory (PROM) chips for storing static information e.g., start-up or BIOS instructions for processor 570. Mass storage 550 may be any current or future mass storage solution, which can be used to store information and/or instructions. Exemplary mass storage solutions include, but are not limited to, Parallel Advanced Technology Attachment (PATA) or Serial Advanced Technology Attachment (SATA) hard disk drives or solid-state drives (internal or external, e.g., having Universal Serial Bus (USB) and/or Firewire interfaces), e.g. those available from Seagate (e.g., the Seagate Barracuda 7102 family) or Hitachi (e.g., the Hitachi Deskstar 7K1000), one or more optical discs, Redundant Array of Independent Disks (RAID) storage, e.g. an array of disks (e.g., SATA arrays), available from various vendors including Dot Hill Systems Corp., LaCie, Nexsan Technologies, Inc. and Enhance Technology, Inc.

Bus 420 communicatively couples processor(s) 570 with the other memory, storage, and communication blocks. Bus 420 can be, e.g., a Peripheral Component Interconnect (PCI) / PCI Extended (PCI-X) bus, Small Computer System Interface (SCSI), USB or the like, for connecting expansion cards, drives and other subsystems as well as other buses, such a front side bus (FSB), which connects processor 570 to software system.

Optionally, operator and administrative interfaces, e.g., a display, keyboard, and a cursor control device, may also be coupled to bus 420 to support direct operator interaction with a computer system. Other operator and administrative interfaces can be provided through network connections connected through communication port 560. The database 510 can be any kind of external hard-drives, floppy drives, IOMEGA^{®} Zip Drives, Compact Disc - Read Only Memory (CD-ROM), Compact Disc-Re-Writable (CD-RW), Digital Video Disk-Read Only Memory (DVD-ROM). Components described above are meant only to exemplify various possibilities. In no way should the aforementioned exemplary computer system limit the scope of the invention as defined by the appended claims.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A system (100) for detection of one or more anomalous objects (194... 194-N) in an area of interest, AOI, (150) the system (100) comprising:
one or more sensors (102, 104) configured to detect movement in the AOI (150);
a computing device (200) communicably coupled to the one or more sensors (102, 104), the computing device (200) configured to:
receive, from a control unit (182) associated with one or more objects (192-1... 192-N), a first set of movement parameters associated with movement of the one or more objects (192-1... 192-N) in the AOI (150);
extract, from output signals generated by the one or more sensors (102, 104), a second set of movement parameters associated with movements in the AOI (150);
compare the first and second sets of movement parameters; and
determine presence of one or more anomalous objects (194... 194-N) in the AOI (150) based on the comparison of the first and second movement parameters.

2. The system (100) of claim 1, wherein any one or both of the first and second sets of movement parameters comprise one or more of velocity, coordinates in time, and no movement.

3. The system (100) of claim 1 or 2, wherein, responsive to detecting movement by the one or more sensors (102, 104), the computing device (200) is further configured to:
operate, through the control unit (182), the one or more first objects (192-1... 192-N) to change one or more of the first set of movement parameters; and
identify the one or more anomalous objects (194-1... 194-N) based on the comparison of the changed one or more of the first sets of movements parameters and the second sets of movement parameters, optionally
wherein changing one or more of the first set of movement parameters comprises changing velocity of the one or more objects (192-1... 192-N).

4. The system (100) of claim 3, wherein changing one or more of the first set of movement parameters comprises changing velocity of the one or more objects (192-1... 192-N) at regular intervals to predefined values.

5. The system (100) of claim 3 or 4, wherein changing one or more of the first set of movement parameters comprises changing velocity of the one or more objects (192-1... 192-N) to zero velocity for a predefined duration of time.

6. The system (100) of any preceding claim, wherein any one or both of the first and second sets of movement parameters further comprise respective real-time positions of the one or more first objects (192-1... 192-N) in the area of interest (150), optionally
wherein the respective real-time positions of the one or more first objects (192-1... 192-N) comprise any one of 2-Dimensional and 3-Dimensional positions of the one or more first objects (192-1... 192-N) in the AOI (150).

7. The system (100) of any preceding claim, wherein the one or more sensors (102, 104) comprise radar units, optionally
wherein the radar units comprise any one or a combination of Doppler, frequency modulated continuous wave (FMCW), ultra-wide band (UWB) and pulse radar units.

8. The system (100) of any preceding claim, wherein the one or more sensors (102, 104) comprise any one or a combination of Time of Flight, ToF, Lidar and passive infrared, PIR, units.

9. A method (400) for detection of one or more anomalous objects (194-1... 194-N) in an area of interest, AOI, (150) the method (400) comprising:
receiving (402), by a computing device (200), from a control unit (182) associated with one or more objects (192-1... 192-N), a first set of movement parameters associated with movement of the one or more objects (192-1... 192-N) in the AOI (150);
extracting (404), by the computing device (200), from output signals generated by the one or more sensors (102, 104), a second set of movement parameters associated with movements in the AOI (150);
comparing (406), by the computing device (200), the first and second sets of movement parameters; and
determining (408), by the computing device (200), presence of one or more anomalous objects (194-1... 194-N) in the AOI (150) based on the comparison of the first and second movement parameters.

10. The method (400) of claim 9, wherein any one or both of the first and second sets of movement parameters comprise one or more of velocity, coordinates in time, and no movement.

11. The method (400) of claim 9 or 10, wherein, responsive to detecting movement by the one or more sensors (102, 104), the method (400) further comprises:
operating, by the computing device (200), through the control unit (182), the one or more first objects (192-1... 192-N) to change one or more of the first set of movement parameters; and
identifying, by the computing device (200), the one or more anomalous objects (194-1... 194-N) based on the comparison of the changed one or more of the first sets of movements parameters and the second sets of movement parameters, optionally
wherein changing one or more of the first set of movement parameters comprises changing velocity of the one or more objects (192-1... 192-N).

12. The method (400) of claim 11, wherein changing one or more of the first set of movement parameters comprises changing velocity of the one or more objects (192-1... 192-N) at regular intervals to predefined values, and/or
wherein changing one or more of the first set of movement parameters comprises changing velocity of the one or more objects (192-1... 192-N) to zero velocity for a predefined duration of time.

13. The method (400) of any of claims 9 to 12, wherein any one or both of the first and second sets of movement parameters further comprise respective real-time positions of the one or more first objects (192-1... 192-N) in the area of interest (150), optionally
wherein the respective real-time positions of the one or more first objects (192-1... 192-N) comprise any one of 2-Dimensional and 3-Dimensional positions of the one or more first objects (192-1... 192-N) in the AOI (150).

14. The method (400) of any of claims 9 to 13, wherein the one or more sensors (102, 104) comprise radar units, optionally
wherein the radar units comprise any one or a combination of Doppler, frequency modulated continuous wave, FMCW, ultra-wide band, UWB and pulse radar units.

15. The method (400) of any of claims 9 to 14, wherein the one or more sensors (102, 104) comprise any one or a combination of Time of Flight, ToF, Lidar and passive infrared, PIR, units.
